# EUROPEAN PATENT SPECIFICATION

(11) **EP 4 552 715 B1**
(45) Date of publication and mention of the grant of the patent: **22.04.2026**
(21) Application number: 24185625.1
(22) Date of filing: 01.07.2024
(51) Int. Cl.: A63H 33/22, G09F 13/34

(54) **LIGHT DISPLAY TOY**
SPIELZEUG MIT LEUCHTANZEIGE
JOUET D'AFFICHAGE LUMINEUX

(30) Priority: 10.11.2023 JP 2023192355
(43) Date of publication of application: 14.05.2025
(73) Proprietor: Tomy Company, Ltd., Katsushika-ku Tokyo 124-8511 (JP)
(72) Inventor: SAITO, Akio, Chiba (JP)
(74) Representative: Dr. Gassner & Partner mbB

(56) References cited:
- JP-A- 2004 008 392
- US-A- 3 568 357
- US-A- 4 541 812
- US-A- 5 644 860

## Description

### Field of the Invention

The present invention relates to a light display toy.

### Background of the Invention

Conventionally known is a light display toy (Patent Document 1) comprising: light sources; a light shielding plate that prevents light from the light sources on the back surface side from leaking to the front surface side, and also, using notches that can be opened and closed that are aligned vertically and horizontally, allows light from the light sources to leak out to the front surface side by the opened notches; and spherical translucent bodies, a portion of which can be pushed into the notches from the front surface side, that are illuminated by the light leaked to the front surface side from the notches when the notches are opened by pushing in.

In this light display toy, the configuration is such that using a dedicated pen, etc., notches which are normally in a closed state have translucent bodies pushed in to open the notches, and light leaked from the notches illuminates the translucent bodies.

### Prior Art Documents

### Patent Documents

Patent Document 1: Examined Utility Model Publication No. S61-24315 US 4 541 812 A discloses a light display toy according to the preamble of claim 1.

### Summary of the Invention

### Problems the Invention Is Intended to Solve

In the abovementioned light display toy, a reset device is provided that pushes translucent bodies with notches opened back to the initial position and closes the notches.

This reset device has projections implanted on the outer surface of a roller. According to this reset device, in a state with a display body including the translucent bodies and a light shielding plate pushed against the roller, by sliding the display body over the roller, the translucent bodies are pushed back to the initial position by sequentially pushing the projections on the outer surface of the roller against the translucent bodies of the display body.

To do that, it was necessary to use a structure in which fingers, etc., would not get caught in the gap between the display body and the roller. It was also necessary to make this safe even if touching the back surface of the display body which is exposed by sliding. Furthermore, the roller with projections attached has a structure that combines a large number of parts, so assembly effort and costs were high.

Initialization was troublesome because the display body was removed and slid on the roller.

The present invention was created considering these circumstances, and its purpose is to provide a light display toy that can be initialized inexpensively and easily.

### Means for Solving the Problems

The first means is a light display toy characterized by comprising:
light sources,
a front surface plate on which holes are arranged in parallel at prescribed intervals on one surface in a hole formation region that expands two-dimensionally,
a light shielding plate that is provided on the back surface side of the front surface plate, in which notches that can open and close are formed corresponding to the holes, that prevents light from the light sources on the back surface side from leaking out to the front surface side in a state with the notches closed, and allows light from the light sources to leak out to the front surface side in a state with the notches open,
translucent bodies in which a portion can be pushed into the notches from the front surface side, with the notches opened by pushing in, and the front surface side illuminated by the light leaked from the notches, and
a reset plate, configured to be able to move toward and away from the light shielding plate on the back surface side of the light shielding plate, on which projections corresponding to the notches are formed on the front surface, and by moving closer to the light shielding plate, uses the projections to push back the translucent bodies pushed into the notches, achieving a state with the notches closed.

The second means is the first means, characterized in that the reset plate is a transparent plate made of plastic, the projections are formed on the front surface, and a light diffusion unit is provided on the back surface that diffuses the light from the light sources and allows the light to enter the interior.

The third means is the second means, characterized in that the light diffusion unit is composed by embossing.

The fourth means is the third means, characterized in that the projections are cylindrical projections, and the tips are configured to be hemispherical.

The fifth means is the second means, characterized in that the reset plate is configured to be able to move toward and away from the light shielding plate while remaining parallel with the light shielding plate.

The sixth means is any of the first to fifth means, characterized in that the front surface plate with holes formed corresponding to the notches is provided on the front surface side of the light shielding plate, and spherical beads that are the translucent bodies and have a larger diameter than the holes on the front surface plate are arranged corresponding to the notches between the front surface plate and the light shielding plate.

The seventh means is the sixth means, characterized in that between the light shielding plate and the reset plate, a holding plate is provided on which holes having a smaller diameter than the beads, in which the projections can be inserted and removed, are formed corresponding to the notches, and the holes of the holding plate prevent the beads from detaching.

The eighth means is any of the first to fifth means, characterized in that a display board on which holes corresponding to the notches are formed is provided on the front surface side of the light shielding plate, and the translucent bodies are composed of cylindrical pins that can be inserted and removed from the holes in the display board.

### Effect of the Invention

According to the first means, simply by moving the reset plate toward and away from the light shielding plate, the translucent bodies are pushed back, the notches close, and the displayed contents can be erased. Therefore, it is possible to use a simple operating mechanism for the reset plate, and possible to realize a light display toy that can be initialized inexpensively and easily.

According to the second and third means, the reset plate is a transparent plate, and the light diffusion unit (e.g. embossing) is provided on the back surface, so light from the light sources is diffused by the light diffusion unit and enters the reset plate, making it possible to evenly illuminate the reset plate, allowing for light display without unevenness.

According to the fourth means, the projections are cylindrical with hemispherical tips, so light from the reset plate is focused, making it possible to display light efficiently.

According to the fifth means, the reset plate is configured to be able to move toward and away from the light shielding plate while remaining parallel with the light shielding plate, making it possible to simultaneously erase characters, symbols or patterns that are displayed by light.

According to the sixth means, spherical beads which are the translucent bodies are disposed in advance between the front surface plate and the light shielding plate, making handling of the light display toy easier.

According to the seventh means, using the holding plate, it is possible to prevent falling out of the beads pushed into the notches of the light shielding plate.

According to the eighth means, by plugging cylindrical pins which are the translucent bodies into holes on the display board, it is possible to perform light display.

### Brief Description of the Drawings

FIG. 1 is a perspective view of a light display toy according to an embodiment.
FIG. 2 is an exploded perspective view of the body of the light display toy.
FIG. 3 is a top view of a front surface plate.
FIG. 4 is a perspective view seen from below the front surface plate.
FIG. 5 is a top view of a light shielding plate.
FIG. 6 is a top view of a holding plate.
FIG. 7 is a perspective view seen from below the holding plate.
FIG. 8 is a cross section view showing a portion of a display body configured from the front surface plate, beads, the light shielding plate, and the holding plate.
FIG. 9 is a perspective view of the top surface side of the reset plate.
FIG. 10 is a cross section view for explaining the operation of the reset plate.
FIG. 11 is a perspective view of the top surface side of a lower housing.
FIG. 12 is a block diagram showing the control structure of the light display toy.
FIG. 13 is a bottom view of dedicated stamps.

### Detailed Description of the Embodiments

Hereafter, an embodiment of the present invention is explained.

### Overall Light Display Toy 100

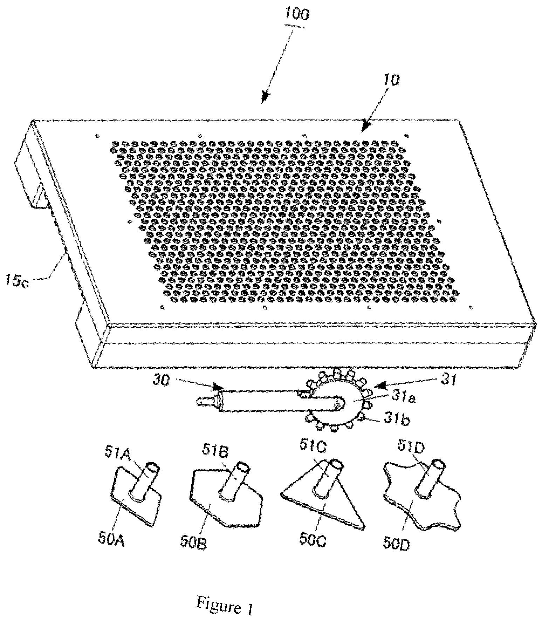

FIG. 1 is a perspective view showing a light display toy 100 according to an embodiment.

The light display toy 100 is configured comprising a toy body 10, a dedicated pen 30, and dedicated stamps 50A to 50D.

According to this light display toy 100, in a state with a power switch (not illustrated) on, when the dedicated pen 30 is moved on the top surface of the toy body 10 while pressing the pen tip against the surface of the toy body 10, characters, symbols or patterns are displayed by light in dot form on the surface of the toy body 10 corresponding to the movement of the dedicated pen 30. When the dedicated stamp 50 (collective name for dedicated stamps 50A to 50D) is pressed against the surface of the toy body 10, a pattern, etc., corresponding to the shape of the dedicated stamp 50 is displayed by light on the part that was pressed against.

After being displayed by light, when handles 15c at left and right are moved up and down once, the character, symbol, or pattern that was displayed by light is erased.

### Toy Body 10

### (Overall)

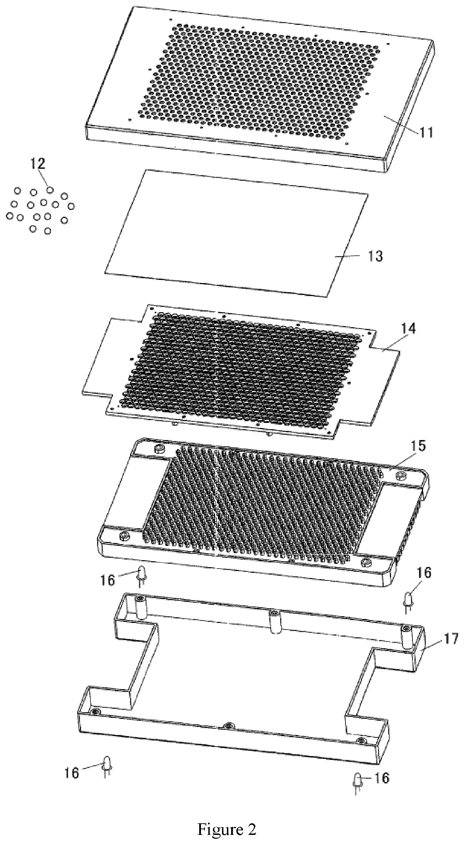

FIG. 2 is an exploded perspective view of the body of the light display toy 100.

The toy body 10 is configured in a thick plate shape, and is a horizontal rectangle in the top view. This toy body 10 is provided with a front surface plate 11, beads 12, a light shielding plate 13, a holding plate 14, a reset plate 15, light sources 16, and a lower housing 17.

### (Front Surface Plate 11)

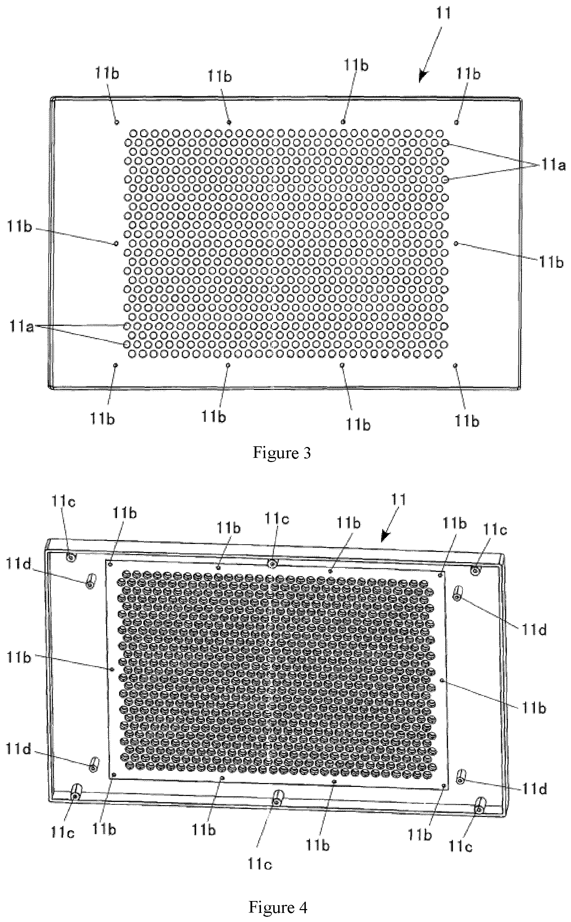

FIG. 3 is a top view of the front surface plate 11, and FIG. 4 is a perspective view of the bottom surface side of the front surface plate 11.

The front surface plate 11 constitutes the light display surface, and is composed from metal or plastic. This front surface plate 11 constitutes an upper housing.

In the front surface plate 11, circular holes 11a are formed regularly at prescribed intervals vertically, horizontally, and diagonally. The holes 11a are formed penetrating the front surface plate 11 vertically. The diameter of the holes 11a is smaller than the diameter of beads 12 on the top surface of the front surface plate 11, so that the beads 12 do not fall out. Meanwhile, the diameter of the holes 11a is slightly larger than the beads 12 on the bottom surface of the front surface plate 11, and the holes 11a are holes of a shape with a narrowed upper part. Beads 12 are housed in a large diameter hole part 110a on the bottom surface side of the front surface plate 11. In a state with the beads 12 housed in the large diameter hole part 110a of the front surface plate 11, it is preferable to configure such that the tops of the beads 12 are approximately flush with the top surface of the front surface plate 11. The large diameter hole part 110a may also be configured using a cylindrical part formed on the bottom surface of the front surface plate 11.

The front surface plate 11 is black and has light shielding properties so that the light display stands out.

Screw insertion holes 11b used for screwing the light shielding plate 13 and the holding plate 14 described later are formed on the outside of the hole formation region of the front surface plate 11.

Meanwhile, internally threaded bosses 11c used for securing the front surface plate 11 to the lower housing 17, and internally threaded bosses 11d used for attaching the reset plate 15 to be able to move vertically are formed on the bottom surface of the front surface plate 11.

### (Beads 12)

The beads 12 are transparent spheres made of glass or made of plastic. The beads 12 are provided one each corresponding to each hole 11a. Light display is realized by the beads 12 being illuminated by light leaked from notches 13a of the light shielding plate 13 described later.

### (Light Shielding Plate 13)

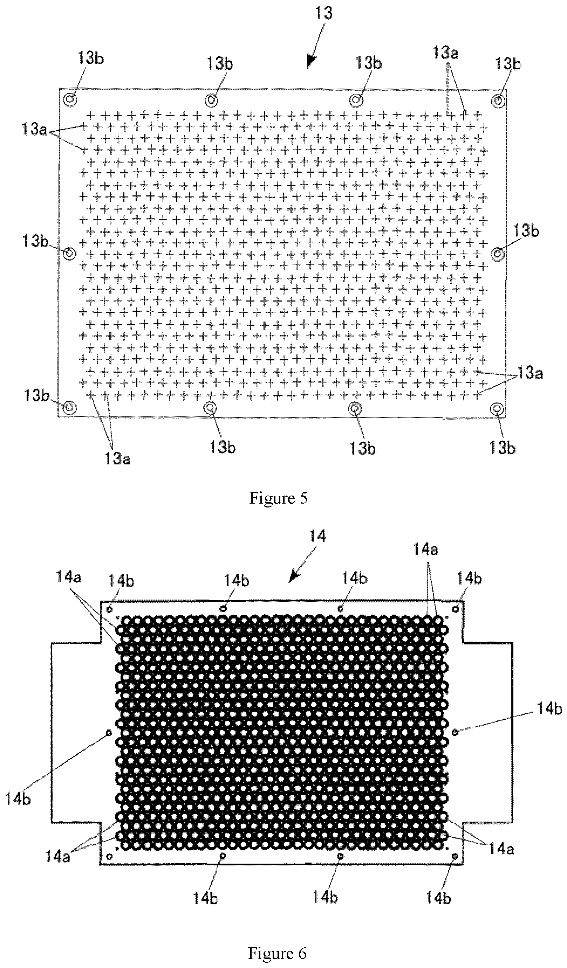

FIG. 5 is a top view of the light shielding plate 13.

The light shielding plate 13 is made of rubber or made of plastic and is flexible. This light shielding plate 13 is provided below the front surface plate 11. The beads 12 are disposed on the light shielding plate 13.

One cross-shaped notch 13a each is formed corresponding to each hole 11a of the front surface plate 11 on the light shielding plate 13. The notches 13a are formed penetrating the light shielding plate 13 vertically.

The notches 13a are normally closed, holding the beads 12 in a lifted state, and also prevent light from the light sources from leaking out to the top surface side. The notches 13a are opened when the beads 12 are pushed down, allowing light from the light sources to leak out to the top surface side. With the notches 13a opened by the beads 12, when the beads 12 are pushed back upward, the notches 13a return to the original closed state due to elastic force. The shape of the notches may be any shape that can open and close, and is not limited to being a cross shape.

Screw insertion holes 13b used to secure the light shielding plate 13 to the front surface plate 11 are formed on the outside of the notch forming region of the light shielding plate 13.

### (Holding Plate 14)

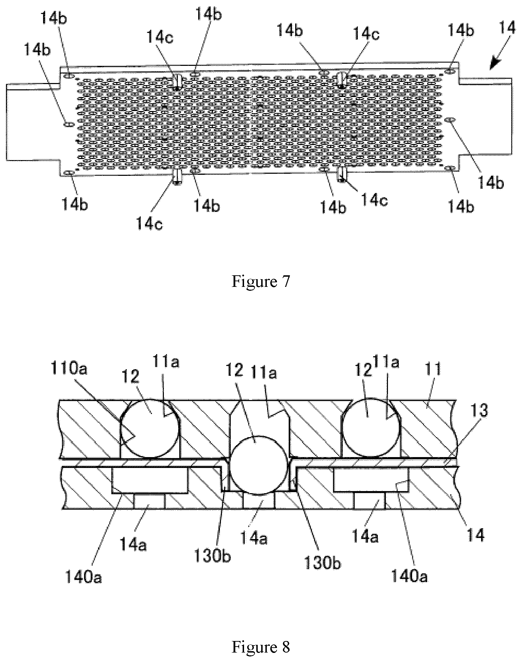

FIG. 6 is a top view of the holding plate 14, and FIG. 7 is a perspective view of the bottom surface side of the holding plate 14.

The holding plate 14, though not particularly limited, is made of plastic. This holding plate 14 is provided below the light shielding plate 13.

The holding plate 14 may have light shielding properties, or may be translucent.

Circular holes 14a are formed one each corresponding to each notch 13a of the light shielding plate 13 on the holding plate 14. The diameter of the holes 14a is slightly larger than the diameter of the beads 12 on the top surface of the light shielding plate 13, and large diameter hole parts 140a (see FIG. 8) are able to receive the bottom half of the beads 12 when the beads 12 are pushed down. When the bottom half of the beads 12 are received, notch pieces 130b are sandwiched between the beads 12 and the peripheral wall of the large diameter hole part 140a. As a result, the beads 12 are held in a pushed down state. Meanwhile, the diameter of the holes 14a is smaller than the diameter of the beads 12 on the bottom surface of the light shielding plate 13, so that the beads 12 do not come out. In other words, the holes 14a are holes of a shape with a counterbore formed on the top surface side. The large diameter hole part 140a may also be configured using a cylindrical part formed on the top surface of the holding plate 14.

Screw insertion holes 14b used for securing the holding plate 14 to the front surface plate 11 are formed on the outside of the hole formation region of the holding plate 14. The holding plate 14 is attached to the front surface plate 11 by arranging the beads 12 with the front surface plate 11 turned upside down, placing the light shielding plate 13 and the holding plate 14 on top of that in order, and screwing the male screws passed through the screw insertion holes 11b of the front surface plate 11 and the screw insertion holes 13b of the light shielding plate 13 into the screw insertion holes 14b. As a result, a display body is configured in which the front surface plate 11, the beads 12, the light shielding plate 13, and the holding plate 14 are integrated.

Meanwhile, on the bottom surface of the holding plate 14, on two long sides, internally threaded bosses 14c used for attaching the reset plate 15 to be able to move up and down are formed.

### (Reset Plate 15)

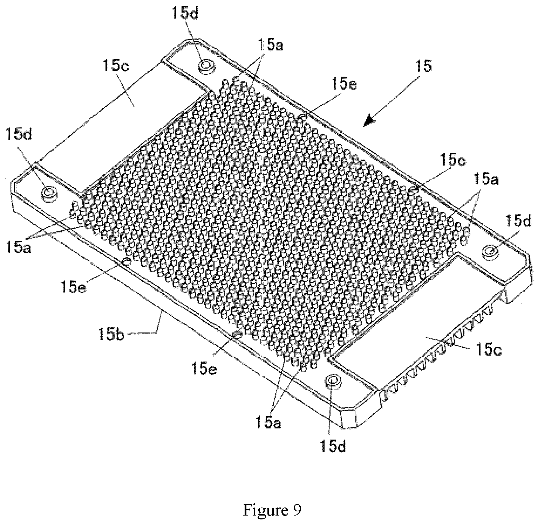

FIG. 9 is a perspective view of the reset plate 15.

The reset plate 15, though not particularly limited, is made of plastic and is transparent. This reset plate 15 is provided below the holding plate 14 separated by a prescribed distance from the holding plate 14.

One each of cylindrical insertion holes 15a is formed corresponding to each hole 14a of the holding plate 14 on the top surface of the reset plate 15. The diameter of the insertion holes 15a is smaller than the diameter of the holes 14a, and the insertion holes 15a can be inserted and removed with respect to the holes 14a by up and down movement of the reset plate 15. The upper end of the insertion hole 15a has a round head, and this round head part functions as a convex lens. Specifically, the round head part functions as a condensing lens.

A light diffusion unit 15b is provided on the bottom surface of the reset plate 15. This light diffusion unit 15b is composed of embossing formed by embossing processing, for example. Specifically, by performing a physical surface processing on the metal surface using etching, sand blasting, etc., and transferring that surface to plastic, embossing is formed on the bottom surface of the reset plate 15. By the existence of this light diffusion unit 15b, light enters from various directions inside the reset plate 15, and it is possible to efficiently and uniformly illuminate the entire reset plate 15.

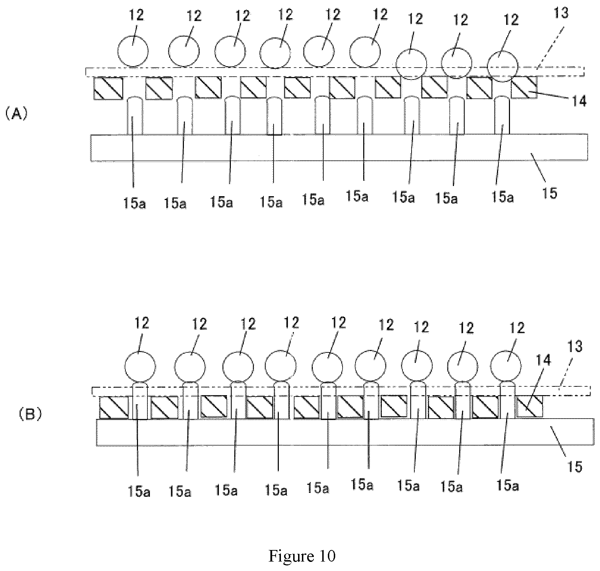

The reset plate 15 is attached to be able to move up and down with respect to the front surface plate 11 and the holding plate 14. The bottommost position of the reset plate 15 in this case is the position at which there is no interference with the beads 12 being pushed down (FIG. 10 (A)), and the topmost position of the reset plate 15 is the position at which the beads 12 are returned to the initial position by the insertion holes 15a (FIG. 10 (B)).

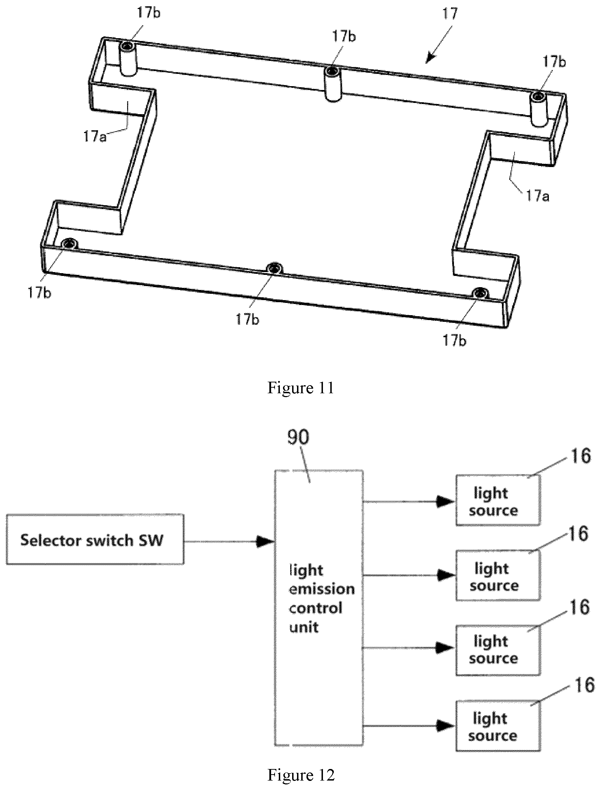

This reset plate 15 is operated by a player. Specifically, handles 15c are formed on each of the end parts in the lengthwise direction of the reset plate 15, and the handles 15c are positioned inside recesses 17a (see FIG. 11) on the side surfaces of the lower housing 17. The reset plate 15 can be moved up and down by holding the handles 15c. The reset plate 15 may also be moved downward by the weight of the reset plate 15 itself.

Boss insertion holes 15d corresponding to the internally threaded bosses 11d of the front surface plate 11 are formed at the four corners of the reset plate 15. Boss insertion holes 15e corresponding to internally threaded bosses 14c of the holding plate 14 are formed on the two long side parts of the reset plate 15. The internally threaded bosses 11c of the front surface plate 11 are fitted in the boss insertion holes 15d, and the internally threaded bosses 14c of the holding plate 14 are fitted in the boss insertion holes 15e, and in this state, male screws are screwed into internally threaded bosses 11c, 11e with washers interposed. As a result, the reset plate 15 is able to move up and down with respect to the display board.

### (Light Sources 16)

As the light sources 16, though not particularly limited, a multicolor LED is used. The multicolor LED is used to change the color of the light display. Changing of colors is performed by pressing a selector switch SW (see FIG. 12).

Four light sources 16 are arranged divided at positions corresponding to two diagonal lines of the hole formation part region of the front surface plate, and at opposing positions across the center of the hole formation part region.

### (Lower Housing 17)

FIG. 11 is a perspective view of the lower housing 17.

Recesses 17a are formed on each end part in the lengthwise direction of the lower housing 17. Screw insertion holes 17b corresponding to the internally threaded bosses 11d of the front surface plate 11 are formed on the lower housing 17. The display board is secured to the lower housing 17 by screwing the male screws that passed through the screw insertion holes 17b from below the lower housing 17 into the internally threaded bosses 11d.

Provided on the lower housing 17 are a (not illustrated) power switch and battery that is the power supply, the selector switch SW, the light sources 16, and a light emission control unit 90 (see FIG. 12).

### (Circuit Configuration)

FIG. 12 is a block diagram showing the control configuration of the light display toy 100.

As shown in the drawing, the light display toy 100 of the embodiment is provided with the light emission control unit 90 that controls the light emission of the light sources 16. The light emission control unit 90 changes the light emission color, etc., of the LEDs which are the four light sources 16 by signals from the selector switch SW.

### Dedicated Pen 30

The pen tip of the dedicated pen 30 shown in FIG. 1 is a size that fits in the holes 11a of the front surface plate 11. A rotary drawing device 31 is provided on the back side of the dedicated pen 30. The drawing device 31 is provided with a rotating plate 31a. Around this rotating plate 31a, projections 31b are provided at the same interval with holes 11a of the display board 11. The projections 31b are a size that fit in the holes 11a of the display board 11. Therefore, for the rotating plate 31a as well, one of the projections 31b fits in the holes 11a of the display board 11, and if the rotating plate 31a is rotated in a prescribed direction on the display board 11, the corresponding beads 12 can be pushed down.

### Dedicated Stamp 50

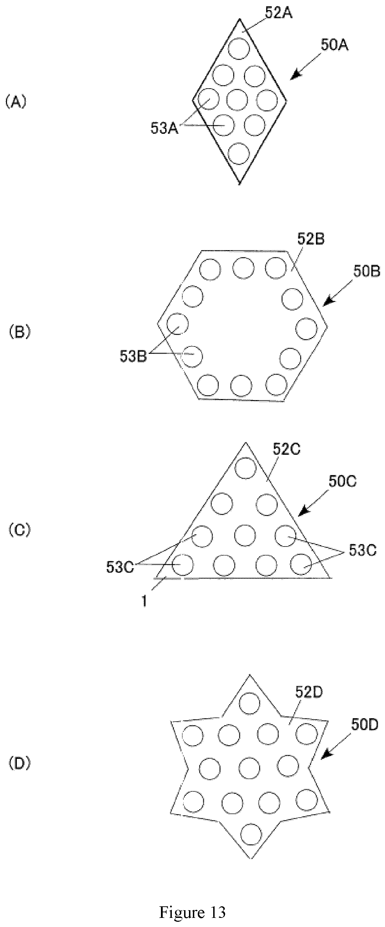

FIG. 13 (A) to (D) are bottom views of the four dedicated stamps 50A to 50D. Hereafter, the dedicated stamps 50A to 50D are explained using FIG. 1 and FIG. 13.

A grip part 51A is provided on the upper part of the dedicated stamp 50A shown in FIG. 13 (A). A diamond-shaped flat plate 52A is secured to the lower part of the grip part 51A, and three projections 53A each are provided along each side of the bottom surface of the flat plate 52A, and one in the center. The diameter of the projections 53A is smaller than the diameter of the holes 11a of the front surface plate 11, and the interval between adjacent projections 53A, 53A is the same as the interval between adjacent holes 11a, 11a of the front surface plate 11. If this dedicated stamp 50A is used, it is possible to push down the beads 12 corresponding to all the projections 53A all at once, and it is possible to form a diamond-shaped pattern all at once simply by placing the dedicated stamp 50A in a prescribed direction and pressing once on the front surface plate 11.

A grip part 51B is provided on the upper part of the dedicated stamp 50B shown in FIG. 13 (B). A hexagonal flat plate 52B is secured to the lower part of the grip part 51B, and three each of the projections 53B are provided along each side of the bottom surface of the flat plate 52B. The diameter of the projections 53B is smaller than the diameter of the holes 11a of the front surface plate 11, and the interval between adjacent projections 53B, 53B is the same as the interval between adjacent holes 11a, 11a of the front surface plate 11. If this dedicated stamp 50B is used, it is possible to push down the beads 12 corresponding to all the projections 53B all at once, and it is possible to form a hexagonal pattern all at once simply by placing the dedicated stamp 50B in a prescribed direction and pressing once on the front surface plate 11.

A grip part 51C is provided on the upper part of the dedicated stamp 50C shown in FIG. 13 (C). A triangular flat plate 52C is secured to the lower part of the grip part 51C, and four projections 53C each are provided along each side of the bottom surface of the flat plate 52C, and one in the center. The diameter of the projections 53C is smaller than the diameter of the holes 11a of the front surface plate 11, and the interval between adjacent projections 53C, 53C is the same as the interval between adjacent holes 11a, 11a of the front surface plate 11. If this dedicated stamp 50C is used, it is possible to push down the beads 12 corresponding to all the projections 53C at once, making it possible to form a triangular pattern all at once simply by placing the dedicated stamp 50C in a prescribed direction and pressing once on the front surface plate 11.

A grip part 51D is provided on the upper part of the dedicated stamp 50D shown in FIG. 13 (D). A star-shaped flat plate 52D is secured to the lower part of the grip part 51D, and three projections 53D each are provided along each side of the bottom surface of the flat plate 52D, and one in the center. The diameter of the projections 53D is smaller than the diameter of the holes 11a of the front surface plate 11, and the interval between adjacent projections 53D, 53D is the same as the interval between adjacent holes 11a, 11a of the front surface plate 11. If this dedicated stamp 50D is used, it is possible to push down the beads 12 corresponding to all the projections 53D at once, making it possible to form a star-shaped pattern all at once simply by placing the dedicated stamp 50D in a prescribed direction and pressing once on the front surface plate 11.

### Modification Examples

In the embodiment noted above, spherical beads 12 were used as the translucent bodies, but instead of the spherical beads 12, it is also possible to use column-shaped translucent bodies. The translucent bodies in this case are attached in advance to the toy body 10 so that the center axis extends in the vertical direction. Operation is done using the dedicated pen 30 or the dedicated stamp 50. The top end of the translucent bodies may also be made to protrude from the front surface plate 11 in advance so that operation can be done directly by hand.

When using the column-shaped translucent bodies, it can also be made possible to insert and remove them from the holes 11a of the front surface plate 11.

When using the column-shaped translucent bodies, it is possible to provide a flange part on the outer periphery of the column-shaped translucent bodies, and as long as the insertion depth is regulated by having the flange part abut the surface of the front surface plate 11, it is possible to not provide the holding plate 14.

In the embodiment noted above, multicolor LEDs were used as the light sources 16, but a single-color LED may also be used. Furthermore, instead of an LED, it is also possible to use a light bulb.

Furthermore, in the embodiment noted above, a light diffusion layer was provided on the bottom surface of the reset plate 15, but instead of providing the light diffusion layer, it is also possible to provide a reflecting plate so as to illuminate the entire surface of the reset plate 15 with light from the light sources.

In the embodiment noted above, for the reset plate 15, the reset plate 15 was provided on the toy body 10 from the start, but it is also possible to configure so that the reset plate 15 is inserted and used only at the time of use. In this case, the reset plate 15 does not have to be transparent, and furthermore, the light diffusion layer on the bottom surface of the reset plate 15 is not necessary.

In the embodiment noted above, the reset plate 15 is configured to be able to move toward and away from the light shielding plate 13 while remaining parallel with the light shielding plate 13, but it is also possible to configure the reset plate 15 to be able to rotate, or be configured to be able to move toward and away from the light shielding plate 13 by a rotation operation.

Furthermore, in the embodiment noted above, the holding plate 14 was provided, but as long as the beads 12 contact the projections 15a of the reset plate 15 and stop when the beads 12 are pushed in, it is possible to not provide the holding plate 14.

In the embodiment noted above, the front surface plate 11 is installed to be horizontal, but it may also be installed to be diagonal or vertical.

### Explanation of Codes

10: Toy body;
11: Front surface plate;
11a: Hole;
12: Bead;
13: Light shielding plate;
13a: Notch;
14: Holding plate;
14a: Hole;
15: Reset plate;
15a: Projection;
15b: Light diffusion unit;
16: Light source;
17: Lower housing;
30: Dedicated pen;
50A to 50D: Dedicated stamp;
100: Light display toy.

## Claims

1. A light display toy (100) comprising:
light sources (16),
a front surface plate (11) on which holes (11a) are arranged in parallel at prescribed intervals on one surface in a hole formation region that expands two-dimensionally,
a light shielding plate (13) that is provided on a back surface side of the front surface plate (11), in which notches (13a) that can open and close are formed corresponding to the holes (11a), that prevents light from the light sources on a back surface side from leaking out to a front surface side in a state with the notches closed, and allows light from the light sources to leak out to the front surface side in a state with the notches open, translucent bodies in which a portion can be pushed into the notches from the front surface side, with the notches opened by pushing in, and the translucent bodies illuminated by the light leaked from the notches to the front surface side, and
**characterized by**
a reset plate (15), configured to be able to move toward and away from the light shielding plate on the back surface side of the light shielding plate, on which projections corresponding to the notches are formed on a front surface, and by moving closer to the light shielding plate, uses the projections to push back the translucent bodies pushed into the notches, achieving a state with the notches closed.

2. The light display toy according to claim 1, **characterized in that** the reset plate is a transparent plate made of plastic, and a light diffusion unit is provided on a back surface that diffuses light from the light sources and allows light to enter an interior.

3. The light display toy according to claim 2, **characterized in that** the light diffusion unit is composed by embossing.

4. The light display toy according to claim 3, **characterized in that** the projections are cylindrical projections, and tips of the projections are configured to be hemispherical.

5. The light display toy according to claim 2, **characterized in that** the reset plate is configured to be able to move toward and away from the light shielding plate while remaining parallel with the light shielding plate.

6. The light display toy according to any of claims 1 to 5, **characterized in that** the front surface plate (11) with the holes (11a) formed corresponding to the notches (13a) is provided on the front surface side of the light shielding plate (13), and spherical beads (12) that are the translucent bodies and have a larger diameter than the holes (11a) on the front surface plate (11) are arranged corresponding to the notches between the front surface plate and the light shielding plate.

7. The light display toy according to claim 6, **characterized in that** between the light shielding plate and the reset plate, a holding plate (14) is provided on which holes having a smaller diameter than the beads, in which the projections can be inserted and removed, are formed corresponding to the notches, and the holes of the holding plate prevent the beads from detaching.

8. The light display toy according to any of claims 1 to 5, **characterized in that** a display board on which holes corresponding to the notches are formed is provided on the front surface side of the light shielding plate, and the translucent bodies are composed of cylindrical pins that can be inserted and removed from the holes in the display board.

## Patentansprüche

1. Spielzeug mit Leuchtanzeige (100), umfassend:
Lichtquellen (16),
eine Frontplatte (11), auf der Löcher (11a) parallel in vorgegebenen Abständen auf einer Oberfläche in einem sich zweidimensional erstreckenden Lochbildungsbereich angeordnet sind,
eine Lichtabschirmplatte (13), die auf einer Rückseite der Frontplatte (11) vorgesehen ist, in der sich öffnende und schließende, den Löchern (11a) entsprechende Kerben (13a) ausgebildet sind, die in einem Zustand mit geschlossenen Kerben verhindert, dass Licht von den Lichtquellen auf der Rückseite zur Vorderseite austritt, und die in einem Zustand mit offenen Kerben Licht von den Lichtquellen zur Vorderseite austreten lässt,
lichtdurchlässige Körper, von denen ein Teil von der Vorderseite her in die Kerben einschiebbar ist, wobei die Kerben durch Einschieben geöffnet werden und die durchscheinenden Körper durch das aus den Kerben zur Vorderseite austretende Licht beleuchtet werden, **gekennzeichnet durch**
eine Rücksetzplatte (15), die so konfiguriert ist, dass sie in Richtung der Lichtabschirmplatte auf der Rückseite der Lichtabschirmplatte bewegbar und von dieser wegbewegbar ist, auf deren Vorderseite Vorsprünge entsprechend den Kerben ausgebildet sind, und die durch Annähern an die Lichtabschirmplatte die Vorsprünge nutzt, um die in die Kerben gedrückten lichtdurchlässigen Körper zurückzudrücken, wodurch ein Zustand mit geschlossenen Kerben erreicht wird.

2. Spielzeug mit Leuchtanzeige nach Anspruch 1, **dadurch gekennzeichnet, dass** die Rücksetzplatte eine transparente Platte aus Kunststoff ist und dass auf der Rückseite eine Lichtstreueinheit vorgesehen ist, die Licht von den Lichtquellen streut und Licht in einen Innenraum eintreten lässt.

3. Spielzeug mit Leuchtanzeige nach Anspruch 2, **dadurch gekennzeichnet, dass** die Lichtstreueinheit aus Prägungen besteht.

4. Spielzeug mit Leuchtanzeige nach Anspruch 3, **dadurch gekennzeichnet, dass** die Vorsprünge zylindrische Vorsprünge sind und dass Spitzen der Vorsprünge halbkugelförmig ausgebildet sind.

5. Spielzeug mit Leuchtanzeige nach Anspruch 2, **dadurch gekennzeichnet, dass** die Rücksetzplatte so konfiguriert ist, dass sie zur Lichtabschirmplatte hin und von dieser weg bewegbar ist, während sie parallel zur Lichtabschirmplatte bleibt.

6. Spielzeug mit Leuchtanzeige nach einem der Ansprüche 1 bis 5, **dadurch gekennzeichnet, dass** die Frontplatte (11) mit den entsprechend den Kerben (13a) ausgebildeten Löchern (11a) auf der Vorderseite der Lichtabschirmplatte (13) vorgesehen ist und dass kugelförmige Perlen (12), die die lichtdurchlässigen Körper sind und einen größeren Durchmesser als die Löcher (11a) auf der Frontplatte (11) besitzen, entsprechend den Kerben zwischen der Frontplatte und der Lichtabschirmplatte angeordnet sind.

7. Spielzeug mit Leuchtanzeige nach Anspruch 6, **dadurch gekennzeichnet, dass** zwischen der Lichtabschirmplatte und der Rücksetzplatte eine Halteplatte (14) vorgesehen ist, auf der Löcher mit einem kleineren Durchmesser als die Perlen entsprechend den Kerben ausgebildet sind, in die die Vorsprünge einsetzbar und aus denen sie entfernbar sind, und die Löcher der Halteplatte verhindern, dass sich die Perlen trennen.

8. Spielzeug mit Leuchtanzeige nach einem der Ansprüche 1 bis 5, **dadurch gekennzeichnet, dass** auf der Vorderseite der Lichtabschirmplatte eine Anzeigetafel vorgesehen ist, auf der den Kerben entsprechende Löcher ausgebildet sind, und dass die lichtdurchlässigen Körper aus zylindrischen Stiften bestehen, die in die Löcher in der Anzeigetafel einführbar und aus diesen entfernbar sind.

## Revendications

1. Jouet à affichage lumineux (100) comprenant :
des sources de lumière (16),
une plaque de surface avant (11) sur laquelle des trous (11a) sont disposés en parallèle à des intervalles prescrits sur une surface dans une zone de formation de trous qui s'étend de manière bidimensionnelle,
une plaque écran à la lumière (13) qui est ménagée sur un côté de surface arrière de la plaque de surface avant (11) dans laquelle des encoches (13a) pouvant s'ouvrir et se fermer sont formées en correspondance avec les trous (11a), qui empêche la lumière provenant des sources de lumière sur un côté de surface arrière de s'échapper vers un côté de surface avant lorsque les encoches sont fermées, et qui permet à la lumière provenant des sources de lumière de s'échapper vers le côté de surface avant lorsque les encoches s'ouvrent,
des corps translucides dans lesquels une partie peut être enfoncée dans les encoches depuis le côté de surface avant, les encoches étant ouvertes par pression, et les corps translucides éclairés par la lumière s'échappant des encoches vers le côté de surface avant, et **caractérisé par**
une plaque de réinitialisation (15) conçue pour pouvoir se rapprocher et s'éloigner de la plaque écran à la lumière sur le côté de surface arrière de la plaque écran à la lumière, sur laquelle des saillies correspondant aux encoches sont formées sur une surface avant, et en se rapprochant de la plaque écran à la lumière, utilise les saillies pour repousser les corps translucides enfoncés dans les encoches, obtenant ainsi un état où les encoches sont fermées.

2. Jouet à affichage lumineux selon la revendication 1, **caractérisé en ce que** la plaque de réinitialisation est une plaque transparente en plastique, et une unité de diffusion de lumière est ménagée sur une surface arrière qui diffuse la lumière provenant des sources de lumière et permet à la lumière de pénétrer à l'intérieur.

3. Jouet à affichage lumineux selon la revendication 2, **caractérisé en ce que** l'unité de diffusion de lumière est composée par gaufrage.

4. Jouet à affichage lumineux selon la revendication 3, **caractérisé en ce que** les saillies sont des saillies cylindriques, et les extrémités des saillies sont configurées de manière à être hémisphériques.

5. Jouet à affichage lumineux selon la revendication 2, **caractérisé en ce que** la plaque de réinitialisation est configurée pour pouvoir se rapprocher et s'éloigner de la plaque écran à la lumière tout en restant parallèle à la plaque écran à la lumière.

6. Jouet à affichage lumineux selon l'une des revendications 1 à 5, **caractérisé en ce que** la plaque de surface avant (11) avec les trous (11a) formés en correspondance avec les encoches (13a) est ménagée sur le côté de surface avant de la plaque écran à la lumière (13), et des billes sphériques (12) qui constituent les corps translucides et ont un diamètre supérieur à celui des trous (11a) sur la plaque de surface avant (11) sont disposées en correspondance avec les encoches entre la plaque de surface avant et la plaque écran à la lumière.

7. Jouet à affichage lumineux selon la revendication 6, **caractérisé en ce qu'**entre la plaque écran à la lumière et la plaque de réinitialisation, une plaque de maintien (14) est ménagée sur laquelle des trous ayant un diamètre inférieur à celui des billes, dans lesquels les saillies peuvent être insérées et retirées, sont formés en correspondance avec les encoches, et les trous de la plaque de maintien empêchent les billes de se détacher.

8. Jouet à affichage lumineux selon l'une des revendications 1 à 5, **caractérisé en ce qu'**un panneau d'affichage sur lequel sont formés des trous correspondant aux encoches est ménagé sur le côté de surface avant de la plaque écran à la lumière, et les corps translucides sont composés de broches cylindriques qui peuvent être insérées et retirées des trous dans le panneau d'affichage.
